# EUROPEAN PATENT SPECIFICATION

(11) **EP 3 484 314 B1**
(45) Date of publication and mention of the grant of the patent: **26.05.2021**
(21) Application number: 17754078.8
(22) Date of filing: 12.07.2017
(51) Int. Cl.: A24C 5/356

(54) **A HANDLING MODULE, A TURNING UNIT, AND A METHOD AND AN APPARATUS FOR EMPTYING A TRAY FILLED WITH ROD LIKE ARTICLES OF THE TOBACCO INDUSTRY**
HANDHABUNGSMODUL UND -VERFAHREN UND VORRICHTUNG ZUM ENTLEEREN EINER MIT STABARTIGEN ARTIKELN DER TABAK VERARBEITENDEN INDUSTRIE GEFÜLLTEN SCHRAGEN
MODE DE MANIPULATION ET PROCÉDÉ ET APPAREIL PERMETTANT DE VIDER UN PLATEAU REMPLI D'ARTICLES EN FORME DE TIGE DE L'INDUSTRIE DU TABAC

(30) Priority: 13.07.2016 EP 16179248; 13.07.2016 EP 16179249
(43) Date of publication of application: 22.05.2019
(73) Proprietor: International Tobacco Machinery Poland SP. Z O.O., 26-600 Radom (PL)
(72) Inventor: POZORSKI, Robert, 26-600 Radom (PL); POTER, Jakub, 26-600 Radom (PL); OWCZAREK, Radoslaw, 26-600 Radom (PL)
(74) Representative: Markieta, Jaroslaw Franciszek
(86) International application number: PCT/EP2017/067502
(87) International publication number: WO 2018/011248

(56) References cited:
- EP-A1- 1 508 520
- EP-A1- 1 741 352
- EP-A2- 1 086 628
- DE-A1- 3 338 390
- DE-A1-102013 208 407

## Description

The object of the inventions is a handling module and a method and an apparatus for emptying of a tray filled with rod like articles of the tobacco industry.

Tobacco industry's factories manufacture various articles for smoking. Both finished and semi-finished products made at successive production stages may be jointly referred to as rod like articles which may be transported on conveyors or in trays. Plastic trays which are used for all types of rod like articles, among others for cigarettes, cigarillos, cigars and filter material rods, are commonly used in the tobacco industry. Plastic trays have the shape of a cuboid without two adjacent walls, i.e. these are trays having four walls. Plastic trays are rigid and are used for temporary storage and transport of rod like articles on the premises of tobacco factories. Cardboard trays designed as five-wall trays are commonly used for the transport of filter rods outside the factory premises. Cardboard trays have thinner walls, are less rigid and easily deformable, whereas one wall is hinged. The filling of a five-wall tray takes place after tray opening i.e. after swinging the hinged wall. After the filling, the tray must be closed i.e. the swinging wall must be turned to its original position. The same hinged wall is swung in order to empty the tray. In the transport time, the filled tray is covered with a lid in order to protect the rods collected inside. The apparatuses for unloading of four-wall and five-wall trays are principally similarly built, however, the mechanisms of the apparatus must be differently adjusted for each type of a tray. Moreover, the type and the physical parameters of unloaded rod like articles also have influence on the unloading process. Machines adapted to emptying of the trays used in the tobacco industry are provided with units for tray handling in the tray emptying cycle. The tray handling consists in carrying and turning a gripped tray in order to empty it by gravity through the open side positioned downward, the direction of pulling out of rod like articles from the tray being perpendicular to the axis of the articles collected in the tray.

An apparatus for emptying of five-wall cardboard trays is known from the patent EP1118543B1. A differently built apparatus for emptying of five-wall cardboard trays is known from the publication WO2015033264A1. Apparatus for emptying of four-wall trays are known from the documents GB2043603A, EP1086628B1, US3759408A, and EP1656841A1. Prior art does not reveal any apparatus provided with a handling module which lifts and turns the tray at the same time. Furthermore, no prior art document reveals apparatus adapted to unloading of both five-wall trays and four-wall trays.

Prior art documents as DE 33 38 390 A1, EP 1 741 352 A1, DE 10 2013 208407 A1, DE 29 17 818 A1, US 3 655 080 A presents techniques of unloading four walled trays when one can find rotation and lifting of the tray, however a skilled person in the art can find only a combination two movements that were used to transport tray to unloading position. Known solutions are not taking into consideration a possibility to optimize not only a path but also derivatives of the motion like speed, acceleration which results dynamics of the motion, the object of the present invention is to introduce a possibility to further control the path and to allow indirect control of derivatives of the motion.

The object of the invention is a handling module designed to handle a tray filled with rod like articles of the tobacco industry, comprising a turning unit designed to turn the tray and a lifting unit designed to lift and to lower the turning unit. The module according to the invention is further characterised in that the turning unit is adapted to turn the tray during the movement of the lifting unit.

The module according to the invention is further characterised in that the turning unit is provided with a mechanism adapted to move gripping members, together with the held tray, transversely to the axis of a rotating shaft.

The module according to the invention is further characterised in that the gripping members are attached together to a movable body attached to a guide connected with the shaft of the turning unit.

The module according to the invention is further characterised in that the gripping members are designed as a pair of lateral grippers, a bottom gripper, and a sliding cover.

The module according to the invention is further characterised in that the gripping members are designed as a pair of lateral grippers integrated with the bottom gripper, and a sliding cover.

The module according to the invention is further characterised in that the turning unit is adapted to convey the tray on a path comprising elliptical sections.

Moreover, the object of the invention is an apparatus for emptying of trays for rod like articles of the tobacco industry provided with a filled tray station, a turning unit designed to turn the filled tray, a lifting unit designed to lift and to lower the turning unit, a filled tray emptying station, and an empty tray station. The apparatus according to the invention is characterised in that the turning unit is adapted to turn the tray during the movement of the lifting unit.

The apparatus according to the invention is further characterised in that the turning unit is provided with a holding mechanism adapted to move the gripping members, together with the held tray, transversely to the axis of the rotating shaft.

The apparatus according to the invention is further characterised in that the gripping members are attached together to a movable body attached to a linear guide connected with the shaft of the turning unit. The apparatus according to the invention is further characterised in that the gripping members are designed as a pair of lateral grippers, a bottom gripper, and an sliding cover.

The apparatus according to the invention is further characterised in that the gripping members are designed as a pair of lateral grippers integrated with the bottom gripper, and the sliding cover.

The apparatus according to the invention is further characterised in that the turning unit is adapted to execute a complex movement consisting of elliptical sections.

The apparatus according to the invention is further characterised in that the apparatus is provided with an opening unit designed to open the hinged wall of the five-wall tray.

Moreover, the object of the invention is a method for emptying of a tray for rod like articles of the tobacco industry wherein the filled tray is placed on the filled tray station, the filled tray is conveyed along the filled tray station, the filled tray is lifted by means of the lifting unit, the filled tray is moved by means of the turning unit, the filled tray is placed in the filled tray emptying station, the empty tray is conveyed to the empty tray station, the empty tray is received from the empty tray station. The method according to the invention is characterised in that during the lifting of the tray, the filled tray is turned by means of the turning unit.

The method according to the invention is further characterised in that the gripping members are moved together with the held tray transversely to the axis of the rotating shaft.

An advantage of the invention is that the tray emptying apparatus according to the invention makes it possible to modify the path of movement for any of the trays used in the tobacco industry. The loads to which the machine mechanisms, and above all the rod like articles in the trays, are subjected are associated with individual movements of the tray, whereas the greatest loads occur during the turning of the tray. The apparatus according to the invention makes it possible to modify the path of movement depending on the weight of the products and the tray itself, and in addition to adapt the accelerations to which the articles are subjected at individual stages of the path of movement. Through the invention the fluidity of movement of machine mechanisms and low loads of such mechanisms have been achieved. The additional degree of freedom of the turning unit achieved by adding additional translation in a direction with a tangent component to the rotation, allows precise transferring of unloaded articles to the tray emptying station. A correction of movement of an emptying unit on a machine in an operating production line does not require any mechanical adjustments or replacement of parts.

The object of the invention was shown in detail in a preferred embodiment in a drawing in which:
- Fig. 1: shows a filled four-wall tray (of the second type) in a perspective view, the front side of the tray being visible,
- Fig. 2: shows the filled five-wall tray (of the first type) in a configuration of the tray of the second type in a perspective view, the front side of the tray being visible,
- Fig. 2a: shows the filled five-wall tray (of the first type) in a configuration of the tray of the second type in a perspective view, the back side of the tray being visible,
- Fig. 2b: shows the filled five-wall tray (of the first type) in a configuration of the tray of the second type in a perspective view, the front side of the tray being visible,
- Fig. 3: shows a tray emptying machine in a side view,
- Fig. 3a: shows a turning unit and a tray lifting unit in a view from the back of the machine,
- Fig. 3b: shows a converting unit and the tray of the first type in a view from the back of the machine,
- Fig. 3c: shows the converting unit and the tray of the first type in a side view,
- Fig. 3d: shows pressing members of the converting unit and a tray of the first type in a top view,
- Fig. 3e: shows the pressing members of the converting unit and the tray of the first type in a top view,
- Fig. 4: shows the tray emptying machine in a side view,
- Fig. 5: shows a handling module with the turning unit in a side view,
- Fig. 6: shows the tray emptying machine in a side view, with the turning unit being shown in several working positions,
- Fig. 7: shows the paths of movement of the four-wall tray - of the second type,
- Fig. 8: shows the paths of movement of the four-wall tray - of the second type,
- Fig. 9: shows the paths of movement of the five-wall tray - of the first type,
- Fig. 10: shows the paths of movement of the five-wall tray - of the first type,
- Fig. 11, 12, 13 and 14: show successive phases of movement of the turning unit.

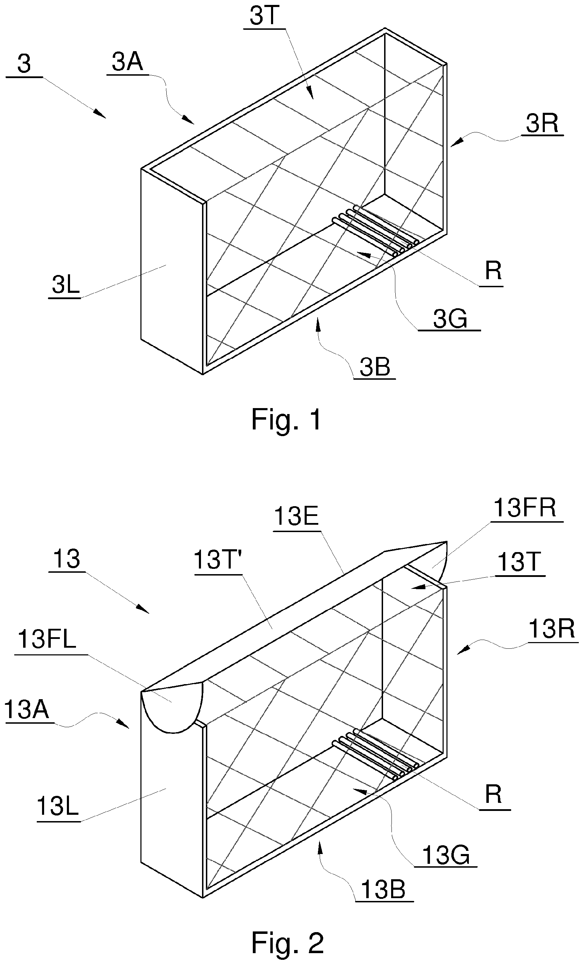

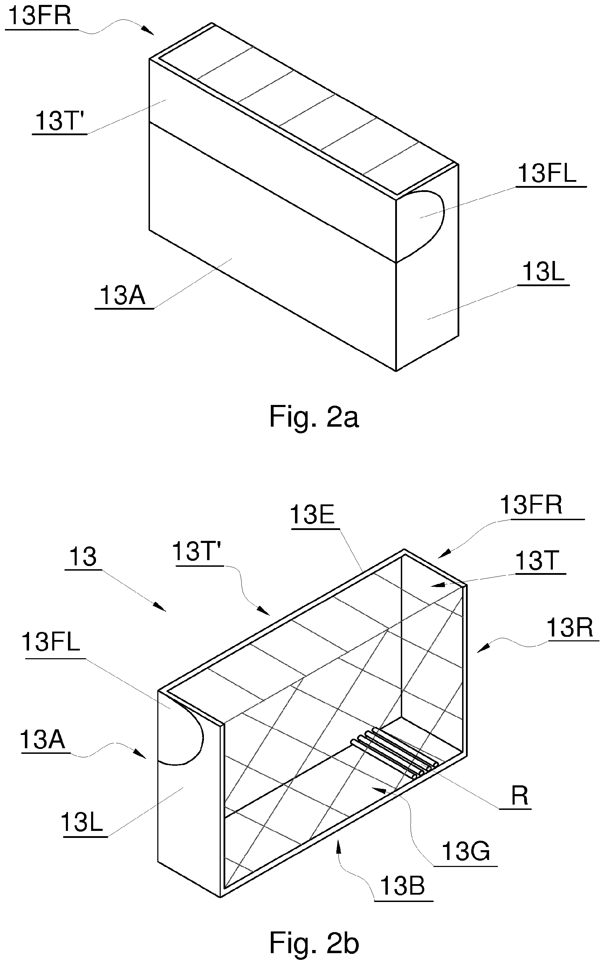

In this description, the invention will be described with reference to a four-wall tray 3 shown in a simplified way in Fig. 1 and to a five-wall tray 13 shown in Fig. 2. Both trays were shown as filled in upright position, i.e. in such position in which the filled trays are placed in the filled trays station of the filled tray emptying machine. The filled space of the trays was marked by hatching with lines, with only several example rod like articles R lying on the bottom of the tray. In such upright position, the filled trays are placed by the operator onto the filled trays station, whereas the operator holds the tray by the sidewalls in such a way that he can see the tray contents. Such expressions as upper, bottom, lateral and back will refer to the position of the trays shown in Figs. 1 and 2, with the front side, left lateral side and upper side of each tray being visible therein. The four-wall tray 3 has a bottom wall 3B on which its stands, a back wall 3A and two lateral walls, a left lateral wall 3L and a right lateral wall 3R, whereas the designation of the sides refers to the position in which the tray can be seen by the operator putting a filled tray onto the filled trays station, with the open front side 3G of the trays 3 being directed towards him. The filling and the emptying of the tray takes place through the open side 3T.

Four-wall trays may be made of plastic or other suitable material ensuring an adequate rigidity and are usually designed for multiple uses.

The five-wall tray 13 has a bottom wall 13B on which it stands, a back wall 13A and two lateral walls, a left lateral wall 13L and a right lateral wall 13R. The five-wall tray 13 has a hinged upper wall 13T' which is designated as self-aligning relative to the back wall 13A of the tray 13 with which it is connected along the edge 13E. The upper wall 13T' has two swinging lugs 13FL and 13FR which, during the transport, are inserted into a slot in the corresponding lateral walls 13L and 13R. After putting the filled five-wall tray 13 onto the filled trays station, the operator lifts the upper wall 13T' so that the swinging lugs 13FL and 13FR pull out of the walls 13L and 13R and loosely hang down on the side outside the lateral walls 13L and 13R. Figs. 2a and 2b show the five-wall tray 13 at a later stage the emptying cycle of the five-wall tray 13 in an open configuration identical with the configuration of the four-wall tray. The upper wall 13T' is swung so as to allow emptying the five-wall tray 13 through the upper open side 13T of the five-wall tray. The filling of the five-wall tray 13 also takes place through the upper side 13T. Similar to the four-wall tray 3, the operator puts the five-wall tray 13 onto the filled trays station while holding the five-wall tray 13 with the open side 13G directed towards him.

Five-wall trays 13 may be made of cardboard or other cheap material, are usually softer than the four-wall trays and are usually designed for a single use.

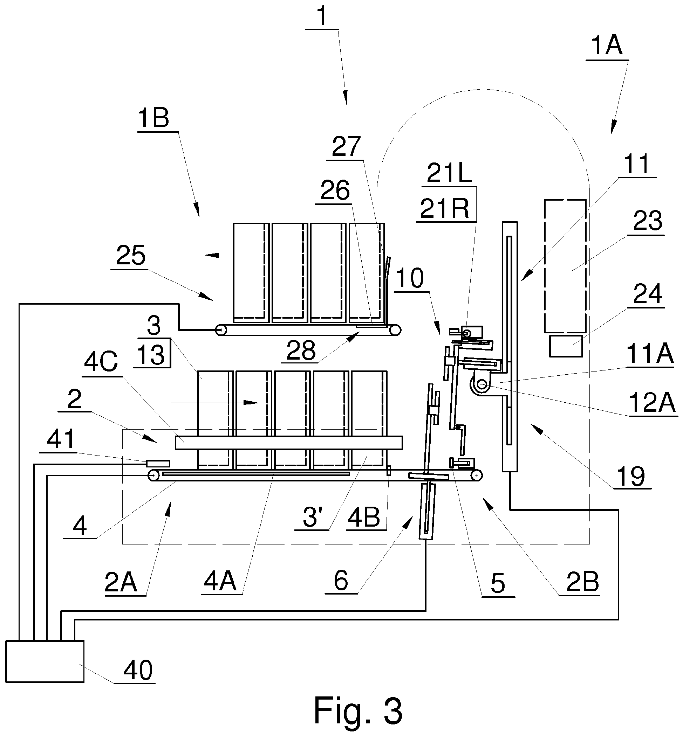

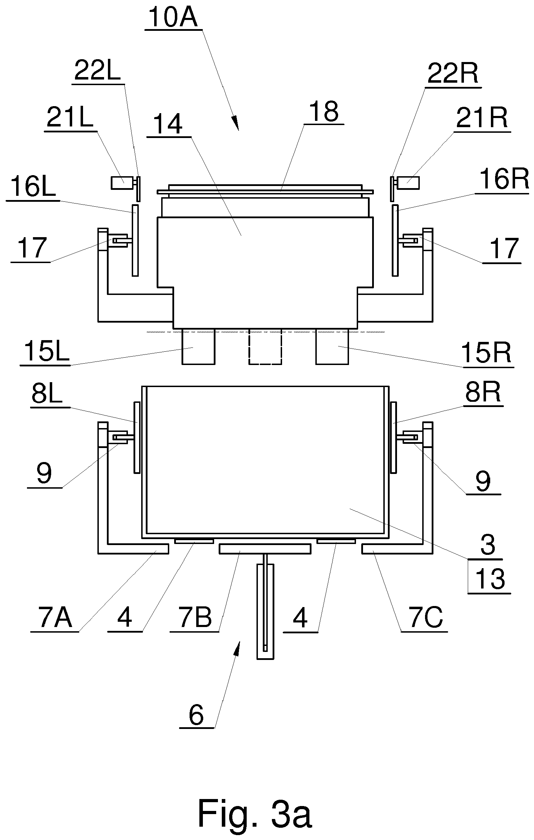

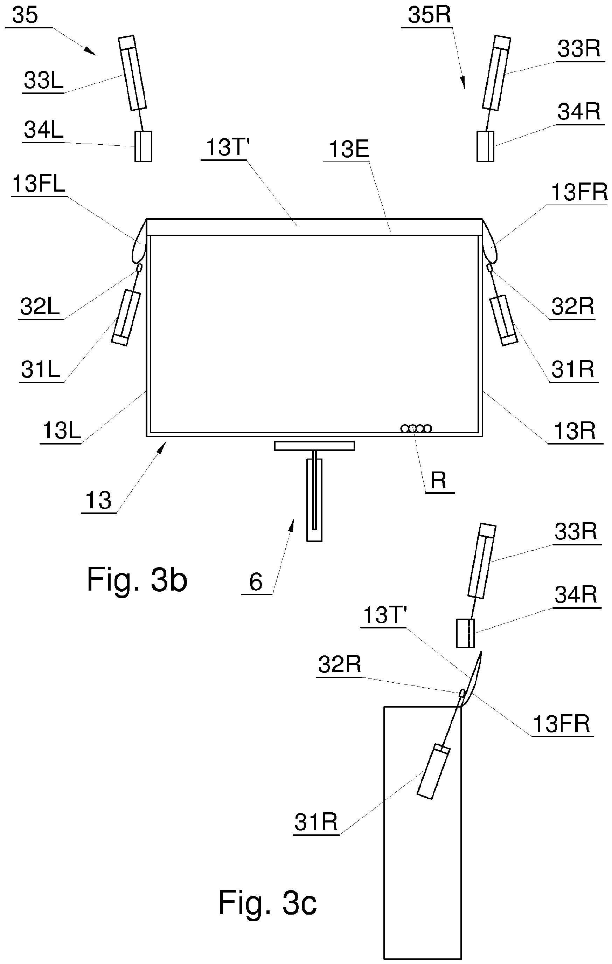

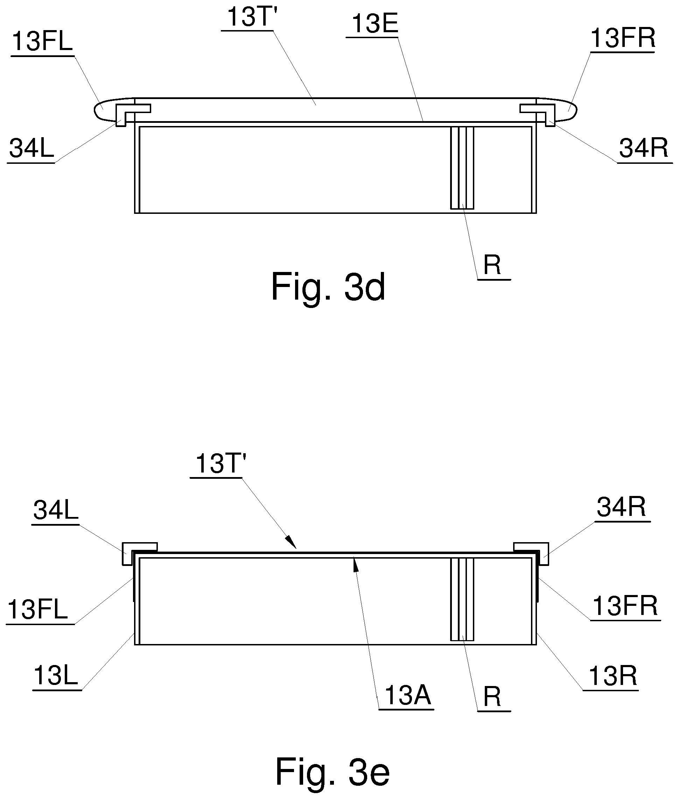

The tray 3, 13 emptying machine 1 described below, being a tray unloader, is adapted to empty both rigid four-wall trays jest 3 and less rigid five-wall trays 13 without the necessity of changing the machine configuration. For the sake of simplicity, the units belonging to the tray emptying machine 1 according to the invention were shown in Fig. 3 in simplified terms without the drive mechanisms; the outer contour of the machine was shown with a dashed line. The tray emptying machine 1 is provided with a filled trays station 2 onto which the filled four-wall trays 3 or five-wall trays 13 to be unloaded are placed by the operator. The filled trays station 2 may be designed as a conveyor 4 provided with two conveyor belts for the conveyance of trays 3, 13; the trays 3, 13 may also be conveyed by means of chains having links with a flat bearing surface. From the filled trays station 2, the trays 3, 13 are fed as first filled trays 3', 13' in order to deliver them for unloading, whereas a plurality of filled trays 3, 13 is collected on the filled trays station 2. The feeding of the first filled tray 3', 13' from all filled trays 3, 13 standing in the station 2 may take place after lifting of all filled trays 3, 13 from the conveyor 4 except for the first tray 3', 13' which is transported by the conveyor 4. The lifting of the trays 3, 13 may take place by means of a lifting device 4A with the movement of which the lowering of a locking device 4B is coupled, which allows the first filled tray 3', 13' transported by the conveyor 4 to pass through. After the feeding of the first filled tray 3', 13', the lifting device 4A is lowered, the trays 3, 13 lifted earlier by the lifting device 4A are put onto the conveyor 4, and the locking device 4B is lifted. The filled trays station 2 is provided with lateral guides 4C situated on two sides of the trays 3, 13 conveyed along the filled trays station 2. The lateral guides 4C are convergently positioned in the feeding direction i.e. from the back part 2A to the front part 2B of the filled trays station 2, whereas the convergence of the lateral guides 4C may be adjusted depending on the kind of the tray 3, 13, for example on the rigidity of the tray 3, 13. Moreover, the lateral guides 4C may be positioned at different heights also depending on the kind of the tray 3, 13, especially on the rigidity of lateral walls of the tray 3, 13 and on the shape of lateral walls of the trays 3, 13. The filled trays station 2 may be provided with an adjustable support element 5; the adjustment of position of the support element 5 is required to allow stopping the filled tray 3, 13 at a place from which it may be easily collected or lifted. Due to the difference in rigidity, the four-wall tray 3 and the five-wall tray 13 may require a different position of the adjustable support element 5. The filled tray 3, 13 is placed by the operator in the back part 2A of the filled trays station 2. In the front part 2B of the filled trays station 2, a lifting unit 6 designed to lift the filled tray 3, 13 is situated. The lifting unit 6 may be embodied as a lift designed to lift filled trays from the conveyor 4 of the filled trays 3, 13 station 2, the mechanism of the lifting unit 6 being situated below the conveyor belts of the conveyor 4.

The tray emptying machine 1 is provided with two opening units 21L, 21R (Fig. 3) designed to open the upper wall 13T' of the five-wall tray 13. The opening units 21L, 21R have for example rotational working elements 22L and 22R (Fig. 3a) which swing the upper wall 13T'. The five-wall tray 13 shown in Fig. 2 has a configuration hereinafter referred to as the configuration of the first type while the four-wall tray 3 shown in Fig. 1 has a configuration hereinafter referred to as the configuration of the second type. It is possible to convert the five-wall tray 13 from the configuration of the first type to the configuration of the second type by swinging the wall 13T' and pressing the same to the wall 13A, and then pressing the lugs 13FL and 13FR to the lateral walls 13L and 13R, respectively. The five-wall tray 13 may be gripped by the turning unit 10 only after the conversion of the five-wall tray to the configuration of the second type. The opening unit 21L and the opening unit 21R together constitute a converting unit which changes the tray configuration from the configuration of the first type (i.e. the tray with the fifth wall covering the inside of the tray) to a configuration corresponding to the tray configuration of the second type (i.e. the four-wall tray in which the inside of the tray is not covered by the fifth wall).

The lifting unit 6 designed to lift the filled trays 3, 13 is provided with brackets 7A, 7B and 7C shown in Fig. 3a. In order to avoid the tray deformation, at the time of lifting the filled tray 3, 13 is supported at several points on interconnected brackets 7A, 7B and 7C which may be inclined towards the front part 1A of the tray emptying machine 1. At the time of lifting by the lifting unit 6, the tray 3, 13 is held by movable lateral clamping members 8L and 8R which in case of five-wall trays 13 made of cardboard have the task of eliminating the risk of deformation of the five-wall trays 13 and displacement (falling down) of rod like articles R in the upper corners of the five-wall tray 13. The lateral clamping members 8L and 8R may be moved for example by pneumatic actuators 9, whereas the position of the clamping members 8L and 8R requires adjustment according to the rigidity and the overall dimensions of the trays 3, 13 used. In case of four-wall trays 3 it is not necessary to exert pressure on the sidewalls 3L, 3R of the tray 3 and in this case the clamping members 8L and 8R constitute limiters of movement in the horizontal direction. The lifting of the tray 3, 13 by the lifting unit 6 may be accomplished by any linear movement mechanism with electric or pneumatic drive. The lifting unit 6 lifts the filled tray 3, 13 to a height at which the turning unit 10 may grip the filled tray 3, 13. The turning unit 10 is adapted to turn the filled tray 3, 13 before unloading it at the filled tray emptying station 23. The turning unit 10 may be designed as stationary at a specific height or may be moved in the vertical direction by the lifting unit 11. The lowering of the turning unit 10, and then the lifting of the filled tray 3, 13 by the turning unit directly from the filled trays 3, 13 station 2 is also possible, and it will be described in more detail below in this description.

Figs. 3b, 3c, 3d, 3e show an alternative converting unit designed to open the five-wall tray. Fig. 3b shows the tray 13 which has been lifted by the lifting unit 6 in a view from the back of the machine. The converting unit 21 comprises actuators 31L and 31R which are provided with pushing members 32L and 32R attached to piston rods of the actuators 31L and 31R. The pushing members 32L and 32R are used
to swing the wall 13T' together with the lugs 13F in the axis passing through the edge 13E. The actuators 31L and 31R are inclined relative to the walls 13L and 13R in order to enable the pushing members to act on the surface of the wall 13T'. As a result of the action of the actuators 31L and 31R, the upper wall 13T' of the tray 13 in the configuration of the first type is swung as shown in Fig. 3c. The actuators 31L and 31R are in the pulled-out position, and the pushing members 32L and 32R abut against the wall 13T'. The task of the actuators 33L and 33R is to further bend the wall 13T' and the lugs 13FL and 13FR. The pushing members 34L and 34R are attached to piston rods of the actuators 33L and 33R, whereas Fig. 3d shows the position of the pushing members 34L and 34R before bending the wall 13T' and the lugs 13FL and 13FR, and Fig. 3e after bending thereof. The pushing member 34L is attached to the actuator 33L and is used to bend the wall 13T' so that it abuts against the wall 13A, and to bend the lug 13FL so that it abuts against the wall 13L. The pushing member 34R is attached to the actuator 33R and is used to bend the wall 13T' so that it abuts against the wall 13A, and to bend the lug 13FR so that it abuts against the wall 13R. The actuator 33L with the pressing member 34L and the actuator 33R with the pressing member 34R constitute a pressing mechanism 34 designed to press the self-aligning wall 13T' to the wall 13A and the connecting members in the form of the lugs 13FL and 13FR to the walls 13L and 13R of the tray 13. The lifting mechanism 32 and the pressing mechanism 34 constitute a converting unit 35 being at the same time an opening unit. In another embodiment, the pushing members 34L and 34R may be attached to the turning unit 10, for example to the body 14, then the bending of the wall 13T' and the lugs 13FL and 13FR takes place during the lowering of the turning unit 10.

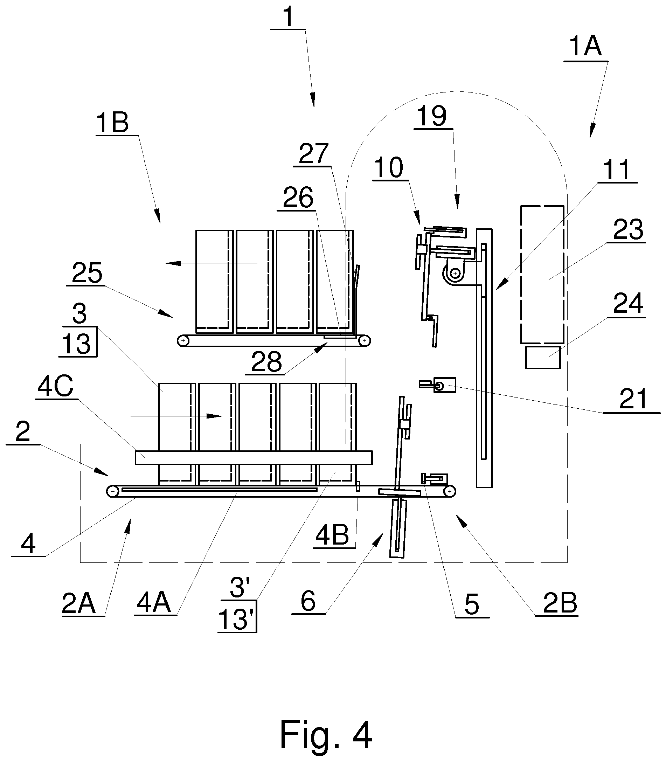

The tray emptying machine 1 is provided with the filled tray emptying station 23 (Fig. 4) in the front part 1A of the machine underneath which the conveyor 24 receiving the rod like articles R unloaded from the trays 3, 13 is situated. In the back part 1B of the tray emptying machine 1, an empty trays station 25 is situated. The empty trays station 25 may be designed as a conveyor or an empty trays store. The empty trays station 25 is provided with a receiving unit 28 comprising a self-aligning shelf 26 with a support 27. On the shelf 26, which has been pulled out, the empty tray 3, 13 carried by the turning unit 10 after emptying at the filled tray emptying station 23 is placed. The backward movement of the shelf 26 with the support 27 towards the back part 1B of the machine 1 causes a displacement of all empty trays 3, 13 collected at the station 25.

The tray emptying machine 1 of Fig. 4 comprises the converting unit 21 situated at such height above the conveyor 4 of the filled trays station 2 which makes it possible to change the configuration of the tray 13' being on the conveyor 4. For such embodiment of the machine, after feeding the filled tray 13 in the configuration of the first type, its configuration is converted to the configuration of the second type, and then the tray 13 is lifted by the lifting unit 6 or is taken by the lowered turning unit 10. The control system is adapted to activate the converting unit 21 when the machine is loaded with trays in the configuration of the first type. In case of feeding of the four-wall tray 3 onto the tray emptying machine 1 the converting unit remains in an inactive state. It is also possible to convert a tray of the first type to the configuration of a tray of the second type after the tray 13 has been lifted by the lifting unit 6.

The tray emptying machine 1 is provided with a controller 40 shown in Fig. 3 connected with individual units of the machine 1. The machine 1 control system comprises a detection unit 41 designed to detect the type of tray placed on the filled trays station 2. Depending on the type of trays placed on the station 2, the activation of the converting unit 21, 35 may take place. The converting unit 21, 35 may be in an active state irrespective of the type of fed tray because its working elements act on the walls of the five-wall tray in the configuration of the first type, and do not act on the walls of the four-wall tray in the configuration of the second type.

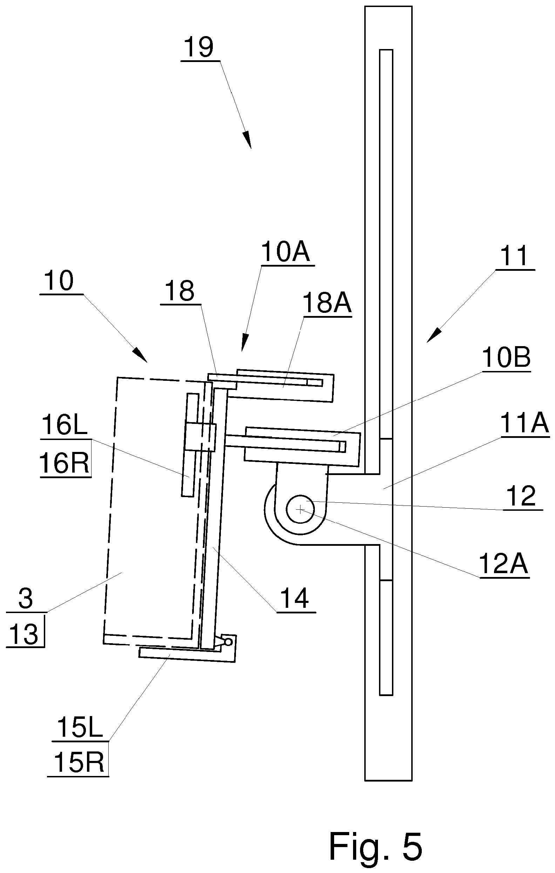

Fig. 5 shows the turning unit 10 which is attached to a rotating shaft 12 with the axis of rotation 12A on a slide 11A of the lifting unit 11. The turning unit 10 is provided with a main support element 14 on which the back wall 3A, 13A of the four-wall 3 or five-wall tray 13, respectively, is supported. The turning unit 10 is provided with gripping members designed to grip the tray 3, 13, namely at least one bottom gripper 15L, 15R to support the bottom wall 3B, 13B of the tray 3, 13, at least one pair of lateral grippers 16L, 16R to grip the lateral walls 3L, 3R, 13L, 13R of the tray 3, 13 and a damper 18 to cover the rod like articles R being in the tray, with the gripping members being attached to a holding mechanism 10A to hold the tray 3, 13 in the turning unit 10 during the handling of the tray 3, 13. The turning unit 10 and the lifting unit 11 constitute a handling unit 19. The handling of the tray 3, 13 is to be understood as the lifting of the tray 3, 13 by the lifting unit 11 and the turning of the tray 3, 13 by the turning unit 10 as well as the moving of the tray 3, 13 on the holding mechanism 10A away from the axis 12A of the shaft 12 of the turning unit 10. In addition, during the execution of the tray 3, 13 emptying cycle it is possible to freely combine the functions of lifting, turning and moving tray 3, 13 away from the axis of rotation 12A.

The embodiment in Fig. 3a shows a pair of self-aligning bottom grippers 15L, 15R adapted to support the bottom wall 3B, 13B of the tray 3, 13, respectively. A greater number of bottom grippers may be required for less rigid trays 3, 13 and in case of heavy rod like articles R. The embodiment shows lateral grippers 16L and 16R designed in the shape of longitudinal slats constituting clamping members. The shape of the lateral grippers 16L, 16R may depend on the shape of the surface of lateral walls of the tray 3, 13, with the five-wall trays 13 having smooth lateral walls, whereas the four-wall trays 3 are ribbed and may have additional protrusions. The lateral grippers 16L, 16R may be moved by means of pneumatic actuators 17 and may act on the tray 3, 13 as clamping members eliminating the deformation of lateral walls of the tray 3L and 3R, and 13L and 13R, respectively. The position of the clamping members 16L and 16R requires an adjustment of the tray 3, 13 holding position according to the rigidity and overall dimensions of the trays 3, 13 used. The damper 18 which is slidably fastened to the guide 18A of the holding mechanism 10A in the turning unit 10 and is moved by means of any not shown drive unit with linear motion, for example a pneumatic or electric drive unit, is used to cover the rod like articles R in the tray 3, 13. The holding mechanism 10A comprises the lateral grippers 16L, 16R, the self-aligning bottom grippers 15L, 15R, the damper 18 and their drive elements attached to the body 14, for example designed as a plate which constitutes the main support element for the tray. The holding mechanism 10A is attached to the linear guide 10B which is connected with the rotating shaft 12 with the axis of rotation 12A. The holding mechanism 10A may be moved along the guide 10B by means of any drive mechanism (not shown) so as to ensure the movement of the holding mechanism 10A transversely to the axis 12A of the shaft 12. The holding mechanism 10A is adapted to change the distance of the tray 3, 13 from the axis 12A of the rotating shaft 12. The combination of rotational movement of the tray 3, 13 with the linear movement allows unrestricted handling of the tray 3, 13 during the transport thereof to the unloading position at the tray 3, 13 emptying station 23. In addition, it is possible to start the rotational movement of the turning unit 10 in any phase of lifting movement of the lifting unit 11.

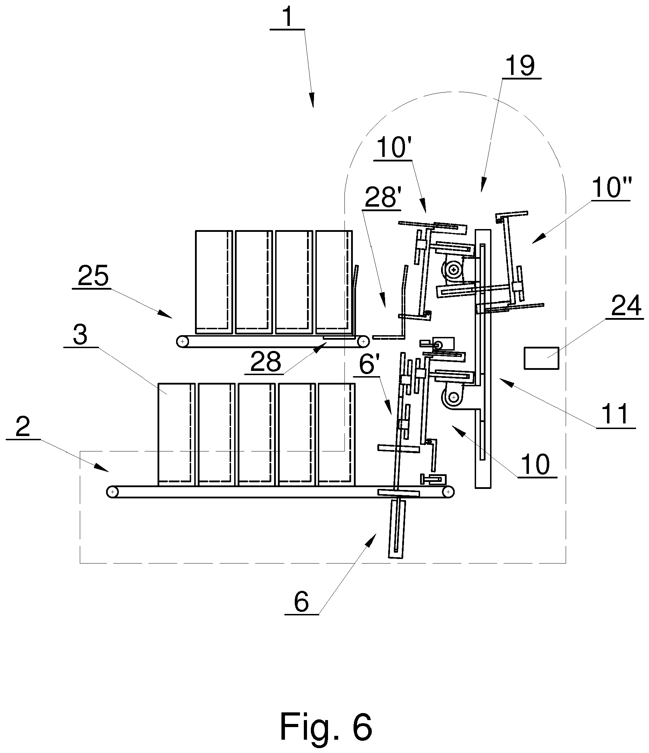

Fig. 6 shows the tray emptying machine 1 with its units in characteristic positions, the lifting unit 6 was shown in the bottom position and marked with a solid line and in the upper position 6' marked with a dashed line. The turning unit 10 in the bottom position is shown with a solid line; in this position, the tray 3, 13 is transferred from the lifting unit 6. The turning unit 10 in the upper position 10' was shown with a dashed line. The rotational movement of the turning unit 10 may start in the upper position 10', it may also start before reaching the upper position 10' i.e. already during the lifting by the lifting unit 11. The turning unit 10 in the position just before the start of unloading of the tray 3, 13 was shown with a dashed line and marked as 10". The receiving unit 28 of the empty trays station 25 shown with a solid line is in a waiting position, i.e. in the retracted position in which it does not receive empty trays. The receiving unit 28 shown with a dashed line is in the tray receiving position and is marked as 28'.

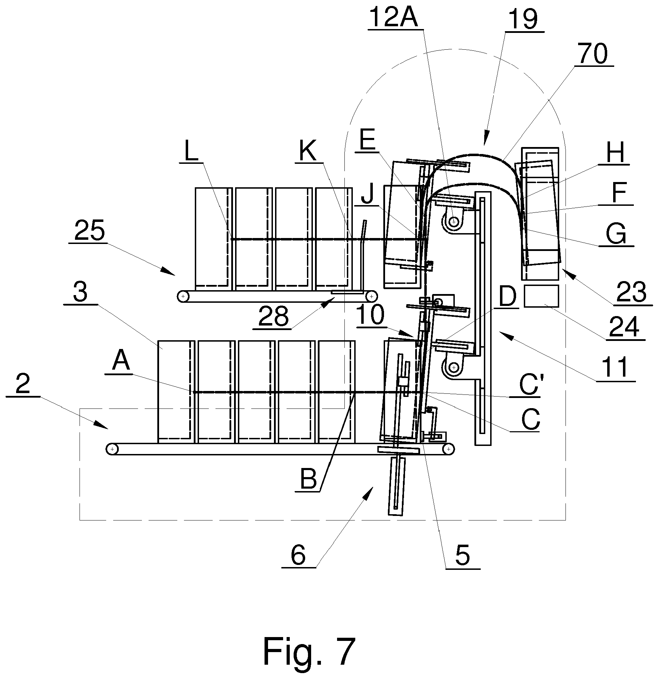

Fig. 7 shows the path of movement 70 of the four-wall tray 3, whereas the successive stages of tray movement were shown with reference to the point situated in the middle of the back wall of the tray. The path of movement 70 connecting successive characteristic points taken by the midpoints of the tray passing through the areas of operation of individual mechanisms was shown with a thick dashed line. At the filled trays station 2, the filled four-wall tray 3 passes through successive positions from point A to B. The filled four-wall tray 3 from the point B is moved to the position controlled by the support element 5 or the lifting unit 6 and stops at point C. The lifting unit 6 starts the upward movement and lifts the four-wall tray 3, and causes an inclination of the filled four-wall tray 3 by several degrees; the position of the four-wall tray 3 after the inclination is marked as C'. During the upward movement the tray 3 is held by the clamps 8L and 8R. The lifting unit 6 ends the upward movement when the four-wall tray 3 has reached point D. The turning unit 10 grips the four-wall tray 3 with the lateral grippers 15L and 16R and the self-aligning supports 15L and 15R, and the damper 18 covers the rod-like articles R collected in the tray. The lifting unit 6 is lowered. Then the turning unit 10 together with the gripped four-wall tray 3 is lifted by the lifting unit 11 i.e. by the handling unit 19 so that the tray 3 reaches the point E. From the point E starts the rotational movement of the turning unit 10, whereas the turning unit 10 is shown with a broken line. After the start of rotational movement of the turning unit 10 starts the movement of the holding mechanism 10A together with the four-wall tray 3 in order to increase the distance of the tray from the axis of the shaft of the turning unit 10. The movement of the holding mechanism 10A takes place transversely to the axis 12A of the rotating shaft 12. Depending on the kind of tray and rod like articles, the movement of the holding mechanism 10A may be started at any phase of the rotational movement. As a result of combination of the rotational movement of the turning unit 10 and the movement of the holding mechanism 10A, the four-wall tray 3 will be moved from the point E to the point F on a nearly elliptical path or a path consisting of elliptical sections. The path of movement on which the filled four-wall tray 3 is moved may comprise circular sections and a plurality of elliptical sections, whereas the shape of the path of movement depends on physical parameters of rod like articles R, primarily on their weight. At the point F, the four-wall tray 3 is swung by several degrees from the vertical direction before the beginning of unloading of the four-wall tray 3. During the transport of the tray from the point F to G, at the filled tray emptying station 23 the damper 18 is retracted and the unloading of the rod-like articles R from the four-wall tray 3 onto the conveyor 24 is started. After the partial unloading of the rod-like articles R from the four-wall tray 3, the four-wall tray 3 may be received by the handling unit 19 because the four-wall tray 3 at that time remains gripped by the holding unit 10A of the turning unit 10. Alternatively, the four-wall tray 3 may remain at the point G in the unloading position until it has been completely emptied. When receiving the empty tray 3, first the tray 3 moves in the vertical direction in the section G-H and then in the section of the path H-J and it is delivered to the receiving unit 28 of the empty trays station 25. The section H-J runs above the section E-F because when receiving the tray after partial unloading of the tray the section G-H must be rectilinear and vertical. The section H-J of the path of movement may be similar to the path section E-F or overlap it (when receiving the tray after it has been completely emptied). The movement of the tray 3 on the section H-J may be accomplished by another unit other than the turning unit 10 of the handling unit 19. Further the empty four-wall tray 3 is moved to the point K by the receiving unit 28 and further along the empty trays station 25 to the point L from where it is collected by the operator. The displacement of empty trays from the point K to L is forced by the movement of the receiving unit 28 related to received successive empty trays.

The transported rod like articles R require gentle treatment and the lowest possible mechanical loads. Due to different weight of rod like articles, the tray unloader mechanisms are subjected to various loads. The loads affect in particular the mechanisms of the turning unit 10. During the handling of the tray 3, 13 the rod like articles R contained in it may move to a certain degree relative to the tray 3, 13.The movement of the rod like articles R relative to the tray 3, 13 should be eliminated or at least limited because it may result in the damaged ends of rod like articles R. Tests have proven that an optimal distribution of accelerations to which the rod like articles R are subjected and of loads on mechanisms of the turning unit 10 may be achieved by starting the rotational movement of the turning unit 10 around the axis 12A before the end of lifting by the lifting unit 11.

By creating a complex movement of the tray ie. By creating a path comprising not only a simple translation or rotation. but is a result of a combination of initial translation (lifting), rotation and yet another translation in a direction having a tangential component to the rotation, it is possible to create a path consisting not only an elliptical sections but in fact any path that is considered optimal for transporting rod-like elements of a particular physical properties. It shall be noted that adding a third degree of freedom as in the present invention expands the range of the possible positions in which the tray may be placed and significantly increase a number of different paths that the tray may be transported. This allows to differentiate the paths for five walled trays from four walled trays whenever it is a necessary, for example due to different rigidity of the five wall trays and four walls trays that are usually made of different materials.

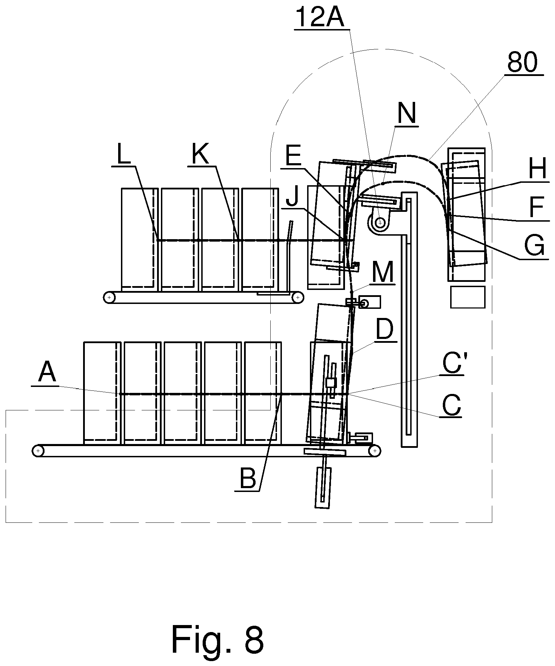

Fig. 8 shows a modified path of movement 80 of the four-wall tray 3 wherein the rotational movement of the turning unit 10 starts at the point M, where the moving of the four-wall tray 3 away from the axis of rotation 12A by moving the mechanisms holding the four-wall tray 3 starts at a point on the section E-N, whereas the moving of the tray 3 may start on the section M-N. Independent mechanisms of rotational movement of the turning unit 10 and linear movement of the mechanism 10A holding the tray make it possible to freely shape the course of the path of movement of the four-wall tray 3.

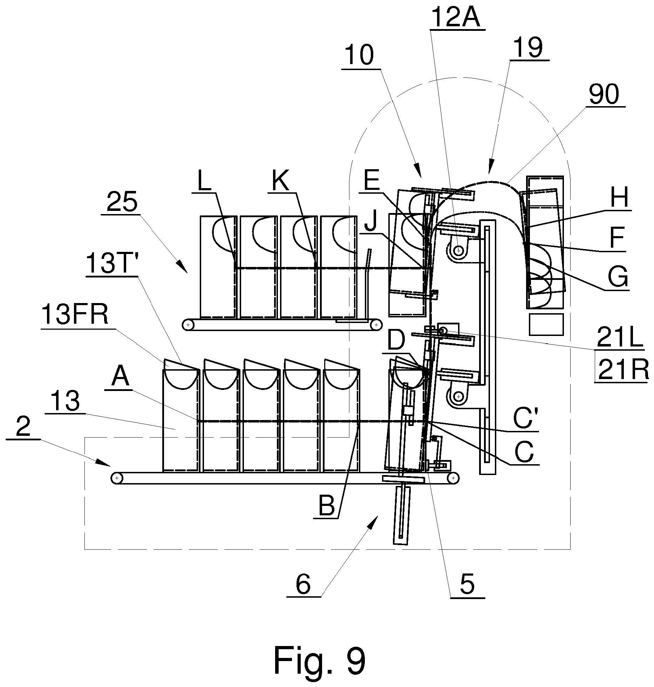

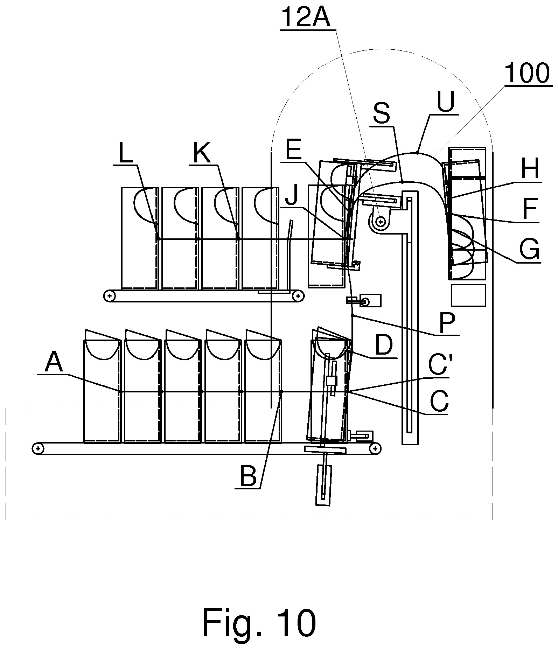

Fig. 9 and Fig. 10 show a path of movement 90, 100 of the five-wall tray 13, whereas, similarly as in case of the four-wall tray 3, the successive stages of tray movement were shown with reference to a point being the midpoint of the back wall of the tray 13. After putting the five-wall tray 13 on the filled trays station 2, the machine operator preliminarily swings the upper wall 13T'. The path of movement connecting successive characteristic points taken by the midpoint of back wall of the five-wall tray 13 was shown with a thick dashed line. The passage from the point A to C is accomplished in the same way as in case of the four-wall tray 3. The lifting unit 6 lifts the five-wall tray 13 to the point D. In this position, the converting unit (for example 21L and 21R) swings the wall 13T' in order to make the subsequent unloading of the five-wall tray 13 possible. The turning unit 10 grips the five-wall tray 13 with the lateral clamps 16L and 16R and the self-aligning supports 15L and 15R, and the damper 18 covers the rod like articles R collected in the five-wall tray 13. The further part of the path of movement of the five-wall tray 13 (i.e. a tray in the configuration of the first type) runs similarly as in case of the four-wall tray 3 (i.e. a tray of the second type).

Tests have shown that an optimal distribution of accelerations to which the rod like articles R are subjected and of loads on mechanisms of the turning unit 10 may be achieved by starting the rotational movement around the axis 12A before reaching the point E. Fig. 10 shows the modified path of movement 100 of the five-wall tray 13 wherein the rotational movement of the turning unit 10 starts at the point P, where the moving of the tray 3 away from the axis of rotation 12A by moving the holding mechanism 10A starts at a point on the section E-S, whereas the moving of the tray 13 may start on the section P-S. In case of five-wall trays 13 the path of movement 100 of the tray may be modified by initial lifting of the tray 13 on the section H-U, and then gentle lowering of the tray on the section U-J, with the lifting of the empty tray 13 being steeper than in case of the four-wall tray 3. Such path of movement of the five-wall tray 13 proved to be more favourable because five-wall trays 13 made of cardboard without rod like articles R inside are more prone to deformations caused by the pressure exerted by the lateral clamping members.

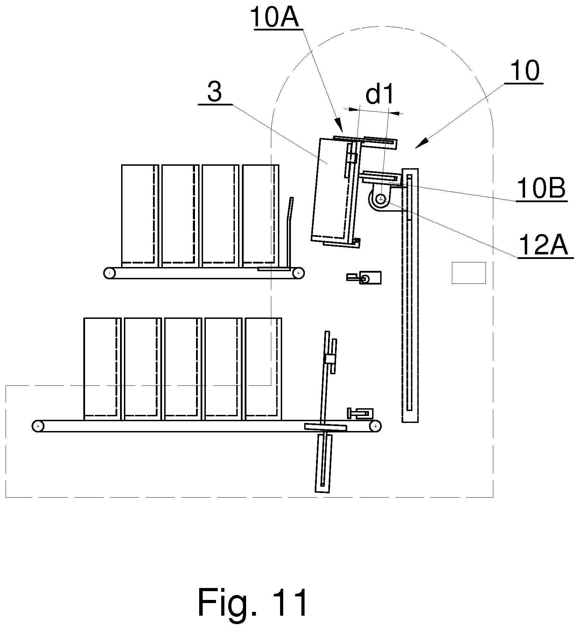

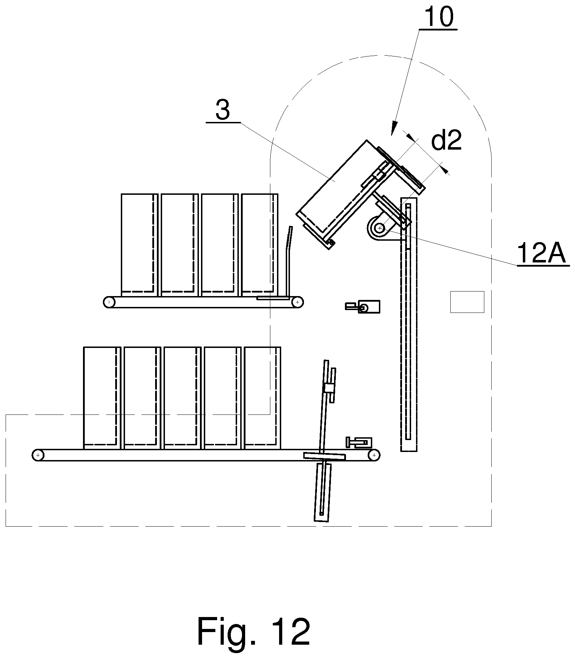

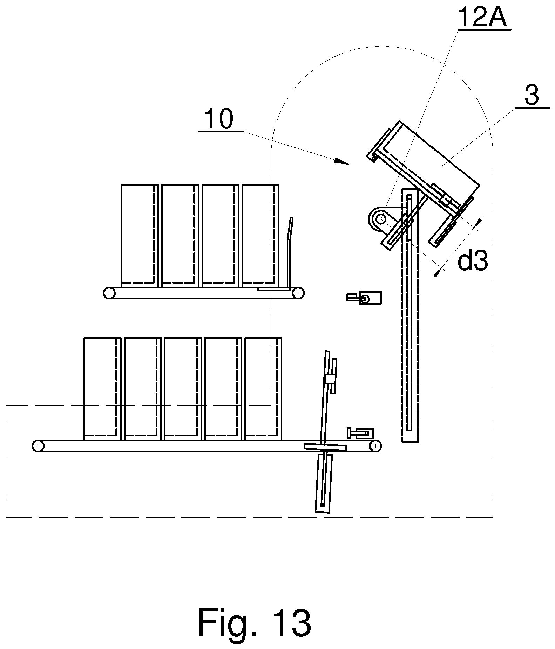

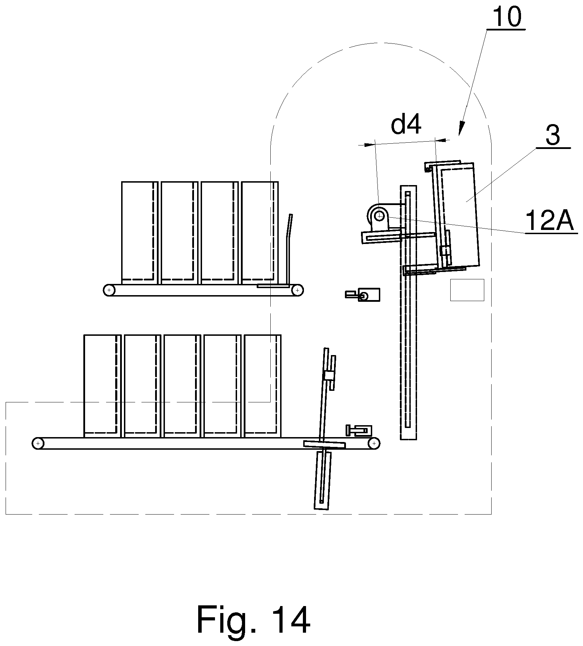

Figures 11 to 14 show successive phases of rotation of the turning unit 10 during which the tray 3, 13 is moved away from the axis 12A of the shaft 12 of the turning unit 10, whereas the distance d1-4 between the back wall of the tray and the axis 12A of the shaft 12 gradually increases from d1 to d4. The distance d1-4 is increased by moving the holding mechanism 10A on the guide 10B. The initial minimum distance between the back wall of the tray and the axis 12A of the shaft 12 shown in Fig. 11 is defined as d1. The final maximum distance between the back wall of the tray and the axis 12A of the shaft 12 is defined as d4, whereas d1 < d2 < d3 < d4 where d2 and d3 are successive intermediate distances between the back wall of the tray 3, 13 and the axis 12A.

## Claims

1. A handling module (19) designed to handle a tray (3, 13) filled with rod like articles of the tobacco industry, comprising
a turning unit (10) with a rotation shaft (12) adapted to rotate the tray (3, 13) around an axis (12A),
a lifting unit (11) adapted to lift and to lower the turning unit (10),
the turning unit (10) is adapted to rotate the tray (3, 13) during the movement of the lifting unit (11),
**characterised in that**
the turning unit (10) is further adapted to add to the rotation of the tray (3, 13) a translation transversely to the axis (12A) of the rotation shaft (12), and in a direction with a tangential component to the rotation.

2. The module as in claim 1 **characterised in that** the turning unit (10) is provided with a mechanism (10A) adapted to move gripping members (15L, 15R, 16L, 16R, 18) holding the tray (3, 13), transversely to the axis (12A) of a rotating shaft (12), and in a direction with a tangential component to the rotation.

3. The module as in claim 2 **characterised in that** the gripping members (15L, 15R, 16L, 16R, 18) designed as a pair of lateral grippers (16L, 16R), a bottom gripper (15L, 15R), and a sliding cover (18) are attached together to a movable body (14) attached to a guide (10B) connected with the shaft (12) of the turning unit (10).

4. The module as in any of the claims 1 to 3 **characterised in that** the turning unit (10) is adapted to convey the tray (3, 13) on a path (70, 80, 90, 100) comprising elliptical sections.

5. A turning unit (10) designed to turn over a tray for rod like articles (R) of the tobacco industry, provided with
a rotating shaft (12),
gripping members (15L, 15R, 16L, 16R, 18) for gripping the tray (3, 13), attached to the rotating shaft (12),
the gripping members (15L, 15R, 16L, 16R, 18) being adapted so that they make it possible to hold the tray (3, 13) during turning over the tray (3, 13),
**characterised in that**
the turning unit (10) is adapted to rotate the tray (3, 13) and to move the tray (3, 13) transversely to the axis (12A) of the rotation shaft (12) during the movement of the lifting unit (11), and the
turning unit (10) is further adapted to add to the rotation of the tray (3, 13) a
translation transversely to the axis (12A) of the rotation shaft (12), and in a direction with a tangential component to the rotation.

6. The unit as in claim 5 **characterised in that** the gripping members (15L, 15R, 16L, 16R, 18) are lateral grippers (16L, 16R), a bottom gripper (15L, 15R), and a sliding cover (18) are attached together to a movable body (14) attached to a linear guide (10B) connected with the shaft (12) of the turning unit (10) to add to the rotation of the tray (3, 13) a translation transversely to the axis (12A) of the rotation shaft (12), and in a direction with a tangential component to the rotation.

7. The unit as in any of the claims from 5 or 6 **characterised in that** the turning unit (10) is adapted to make a movement of the tray comprising elliptical sections.

8. An apparatus (1) for emptying of a
tray (3, 13) for rod like articles (R) of the tobacco industry
provided with
a filled tray station (2),
handling module (19) comprising a turning unit (10) with a rotation shaft (12) adapted to rotate the filled tray (3, 13) around an axis (12A), and a lifting unit (11) designed to lift and to lower the turning unit (10),
a filled tray emptying station (23),
an empty tray station (25),
**characterised in that**
the turning unit (10) is adapted to rotate the tray (3, 13) and to move the tray (3, 13) transversely to the axis (12A) of the rotation shaft (12) during the movement of the lifting unit (11), and turning unit (10) is further adapted to add to the rotation of the tray (3, 13) a translation transversely to the axis (12A) of the rotation shaft (12), and in a direction with a tangential component to the rotation.

9. The apparatus as in claim 8 **characterised in that** the turning unit (10) is provided with a holding mechanism (10A) and the gripping members (15L, 15R, 16L, 16R, 18), adopted to move together with the held tray (3, 13), transversely to the axis (12A) of the rotating shaft (12) and in a direction with a tangential component to the rotation.

10. The apparatus as in claim 9 **characterised in that** the gripping members (15L, 15R, 16L, 16R, 18) designed as a pair of lateral grippers (16L, 16R), a bottom gripper (15L, 15R), and a sliding cover (18) are attached together to a movable body (14) attached to a linear guide (10B) connected with the shaft (12) of the turning unit (10) to add to the rotation of the tray (3, 13) a translation transversely to the axis (12A) of the rotation shaft (12), and in a direction with a tangential component to the rotation.

11. The apparatus as in any of the claims 8 to 10 **characterised in that** the turning unit (10) is adapted to execute a complex movement consisting of elliptical sections.

12. The apparatus as in any of the claims 8 to 11 **characterised in that** the apparatus is provided with an opening unit (21, 35) designed to open the hinged wall of the five-wall tray (13).

13. A method for emptying of a
tray (3, 13) for rod like articles (R) of the tobacco industry wherein
the filled tray (3, 13) is placed on the filled tray station (2),
the filled tray (3, 13) is conveyed along the filled tray station (2),
the filled tray (3, 13) is lifted by means of the lifting unit (11),
the filled tray (3, 13) is moved by means of the turning unit (10) with a rotation shaft (12) with axis (12A),
the filled tray (3, 13) is placed in the filled tray emptying station (23),
the empty tray (3, 13) is conveyed to the empty tray station (25),
the empty tray (3, 13) is received from the empty tray station (25),
**characterised in that**
during the lifting of the tray (3, 13), the filled tray (3, 13) is rotated and moved transversely to the axis (12A) of the rotation shaft (12) in a direction with a tangential component to the rotation, by the turning unit (10).

## Patentansprüche

1. Ein Handhabungsmodul (19) zur Handhabung einer Schale (3, 13), das mit stabförmigen Gegenständen der Tabakindustrie gefüllt ist, umfassend:
eine Dreheinheit (10) mit einer Rotationswelle (12), die dazu ausgelegt ist, die Schale (3, 13) um eine Achse (12A) zu drehen,
eine Hebeeinheit (11), die zum Heben und Senken der Dreheinheit (10) geeignet ist,
die Dreheinheit (10), die so ausgelegt ist, dass sie die Schale (3, 13) während der Bewegung der
Hebeeinheit (11) dreht, **ist dadurch gekennzeichnet, dass**
die Dreheinheit (10) weiter angepasst ist, um der Drehung der Schale (3, 13) eine Verschiebung quer zur Achse (12A) der Rotationswelle (12) und in einer Richtung mit einer Tangentialkomponente zur Rotation hinzuzufügen.

2. Das Modul nach Anspruch 1 ist **dadurch gekennzeichnet, dass** die Dreheinheit (10) mit einem Mechanismus (10A) versehen ist, der dazu ausgelegt ist, Greifelemente (15L, 15R, 16L, 16R, 18) zu bewegen, die die Schale (3, 13) halten; quer zur Achse (12A) einer Rotationswelle (12) und in einer Richtung mit einer tangentialen Komponente zur Rotation.

3. Das Modul nach Anspruch 2 ist **dadurch gekennzeichnet, dass** die Greifelemente (15L, 15R, 16L, 16R, 18) als ein Paar seitlicher Greifer (16L, 16R), ein Bodengreifer (15L, 15R) und ein Gleitgitter ausgelegt sind, die Gleitabdeckung (18) ist zusammen an einem beweglichen Körper (14) angebracht, der an einer Führung (10B) angebracht ist, die mit der Rotationswelle (12) der Dreheinheit (10) verbunden ist.

4. Das Modul nach einem der Ansprüche 1 bis 3 ist **dadurch gekennzeichnet, dass** die Dreheinheit (10) dazu ausgelegt ist, die Schale (3, 13) auf einem Weg (70, 80, 90, 100) zu befördern, der elliptische Abschnitte umfasst.

5. Die Dreheinheit (10) zum Umdrehen einer Schale für stabförmige Gegenstände (R) der Tabakindustrie, die versehen in Folgendes ist;
mit einer Rotationswelle (12),
Greifelemente (15L, 15R, 16L, 16R, 18) zum Greifen der an der Rotationswelle (12) angebrachten Schale (3, 13),
die Greifelemente (15L, 15R, 16L, 16R, 18) so angepasst werden, dass sie es ermöglichen, die Schale (3, 13) beim Umdrehen der Schale (3, 13) zu halten,
**ist dadurch gekennzeichnet,**
**dass** die Dreheinheit (10) dazu ausgelegt ist, die Schale (3, 13) zu drehen und die Schale (3, 13) während der Bewegung des Hebevorgangs quer zur Achse (12A) der Rotationswelle (12) zu bewegen Hebeeinheit (11),
und die Dreheinheit (10) ist ferner angepasst, um der Drehung der Schale (3, 13) eine Verschiebung quer zur Achse (12A) der Rotationswelle (12) und in einer Richtung mit einer tangentialen Komponente zur Rotation hinzuzufügen.

6. Die Einheit nach Anspruch 5 ist **dadurch gekennzeichnet, dass** die Greifelemente (15L, 15R, 16L, 16R, 18) seitliche Greifer (16L, 16R), ein Bodengreifer (15L, 15R) und eine Gleitabdeckung (18) sind zusammen an einem beweglichen Körper (14) angebracht, der an einer linearen Führung (10B) angebracht ist, die mit der Rotationswelle (12) der Dreheinheit (10) verbunden ist, um der Drehung der Schale (3, 13) eine Verschiebung quer zu der Achse (12A) der Rotationswelle (12) und in einer Richtung mit einer tangentialen Komponente zur Rotation hinzuzufügen.

7. Die Einheit wie in einem der Ansprüche 5 bis 6 ist **dadurch gekennzeichnet, dass** die Dreheinheit (10) so ausgelegt ist, dass sie eine Bewegung der Schale mit elliptischen Abschnitten ausführt.

8. Eine Vorrichtung (1) zum Entleeren einer Schale (3, 13) für stabförmige Gegenstände (R) der Tabakindustrie, die mit Folgenden versehen sind:
einer gefüllten Schalenstation (2),
Handhabungsmodul (19), umfassend eine Dreheinheit (10) mit einer Rotationswelle (12),
die zum Drehen der gefüllten Schale (3, 13) um eine Achse (12A) ausgelegt ist, und eine Hebeeinheit (11) zum Heben und Senken die Dreheinheit (10),
eine Entleerungsstation (23) für gefüllte Schalen,
eine leere Schalenstation (25),
**die dadurch gekennzeichnet ist, dass**
die Dreheinheit (10) dazu ausgelegt ist, die Schale (3, 13) zu drehen und die Schale (3, 13) während der Bewegung der Hebeeinheit (11) quer zur Achse (12A) der Rotationswelle (12) zu bewegen und die Dreheinheit (10) ist ferner angepasst, um der Drehung der Schale (3, 13) eine Verschiebung quer zur Achse (12A) der Rotationswelle (12) und in einer Richtung mit einer tangentialen Komponente zur Drehung hinzuzufügen.

9. Die Vorrichtung nach Anspruch 8 ist **dadurch gekennzeichnet, dass** die Dreheinheit (10) mit einem Haltemechanismus (10A) versehen ist und die Greifelemente (15L, 15R, 16L, 16R, 18) zur gemeinsamen Bewegung angenommen sind mit der gehaltenen Schale (3, 13) quer zur Achse (12A) der Rotationswelle (12) und in einer Richtung mit einer tangentialen Komponente zur Rotation.

10. Die Vorrichtung nach Anspruch 9 ist **dadurch gekennzeichnet, dass** die Greifelemente (15L, 15R, 16L, 16R, 18) als ein Paar seitlicher Greifer (16L, 16R), ein Bodengreifer (15L, 15R) und eine Gleitabdeckung ausgelegt sind (18), sind zusammen an einem beweglichen Körper (14) angebracht, der an einer linearen Führung (10B) angebracht ist, die mit der Rotationswelle (12) der Dreheinheit (10) verbunden ist, um der Drehung der Schale (3, 13) eine Translation quer zur Achse (12A) der Rotationswelle (12) und in einer Richtung mit einer tangentialen Komponente zur Rotation hinzuzufügen.

11. Die Vorrichtung nach einem der Ansprüche 8 bis 10 ist **dadurch gekennzeichnet, dass** die Dreheinheit (10) dazu ausgelegt ist, eine komplexe Bewegung auszuführen, die aus elliptischen Abschnitten besteht.

12. Die Vorrichtung nach einem der Ansprüche 8 bis 11 ist **dadurch gekennzeichnet, dass** die Vorrichtung mit einer Öffnungseinheit (21, 35) versehen ist, die zum Öffnen der Klappwand der fünfwandigen Schale (13) ausgelegt ist.

13. Das Verfahren zum Entleeren einer Schale (3, 13) für stabförmige Gegenstände (R) der Tabakindustrie, wobei
die gefüllte Schale (3, 13) auf die gefüllte Schalenstation (2) gestellt wird,
die gefüllte Schale (3, 13) wird entlang der gefüllten Schalenstation (2) befördert,
die gefüllte Schale (3, 13) wird mittels der Hebeeinheit (11) angehoben,
die gefüllte Schale (3, 13) wird mittels der Dreheinheit (10) mit einer Rotationswelle (12) mit Achse (12A) bewegt,
die gefüllte Schale (3, 13) wird in die Entleerungsstation der gefüllten Schale (23) gebracht wird, die leere Schale (3, 13) zur leeren Schalenstation (25) befördert,
die leere Schale (3, 13) wird von der leeren Fachstation (25) empfangen,
**ist dadurch gekennzeichnet, dass**
beim Anheben der Schale (3, 13) die gefüllte Schale (3, 13) gedreht und quer zur Achse (12A) der Rotationswelle (12) in einer Richtung mit einer tangentialen Komponente zum Drehung durch die Dreheinheit (10) bewegt wird.

## Revendications

1. Module de manipulation (19) conçu pour manipuler un plateau (3, 13) rempli d'articles en forme de tige pour l'industrie du tabac, comprenant
une unité de rotation (10) avec un arbre de rotation (12) adapté pour faire tourner le plateau (3, 13) autour d'un axe (12A),
une unité de levage (11) adaptée pour lever et abaisser l'unité de rotation (10),
l'unité de rotation (10) est adaptée pour faire tourner le plateau (3, 13) pendant le mouvement de l'unité de levage (11),
**caractérisé en ce que**
l'unité de rotation (10) est en outre adaptée pour ajouter à la rotation du plateau (3, 13) une translation transversalement à l'axe (12A) de l'arbre de rotation (12), et dans une direction avec une composante tangentielle à la rotation.

2. Le module selon la revendication 1, **caractérisé en ce que** l'unité de rotation (10) est munie d'un mécanisme (10A) adapté pour déplacer des éléments de préhension (15L, 15R, 16L, 16R, 18) maintenant le plateau (3, 13), transversalement à l'axe (12A) d'un arbre rotatif (12), et dans une direction avec une composante tangentielle à la rotation.

3. Le module selon la revendication 2, **caractérisé en ce que** les éléments de préhension (15L, 15R, 16L, 16R, 18) conçus comme une paire de pinces latérales (16L, 16R), une pince inférieure (15L, 15R) et un couvercle coulissant (18) sont fixés ensemble à un corps mobile (14) fixé à un guide (10B) relié à l'arbre (12) de l'unité de rotation (10).

4. Le module selon l'une quelconque des revendications 1 à 3, **caractérisé en ce que** l'unité de rotation (10) est adaptée pour transporter le plateau (3, 13) sur un chemin (70, 80, 90, 100) comprenant des sections elliptiques.

5. Une unité de rotation (10) conçue pour retourner un plateau pour des articles en forme de tige (R) de l'industrie du tabac, pourvue d'un
arbre rotatif (12), d'éléments de préhension (15L, 15R, 16L, 16R, 18) pour saisir le plateau (3, 13), fixés à l'arbre rotatif (12),
les organes de préhension (15L, 15R, 16L, 16R, 18) étant adaptés de manière à permettre de maintenir le plateau (3, 13) pendant le retournement du plateau (3, 13), **caractérisé en ce que**
l'unité de rotation (10) est adaptée pour faire tourner le plateau (3, 13) et pour déplacer le plateau (3, 13) transversalement à l'axe (12A) de l'arbre de rotation (12) pendant le mouvement de l'unité de levage (11), et
l'unité de rotation (10) est en outre adaptée pour ajouter à la rotation du plateau (3, 13) une
translation transversalement à l'axe (12A) de l'arbre de rotation (12), et dans une direction avec une composante tangentielle à la rotation.

6. L'unité selon la revendication 5, **caractérisée en ce que** les éléments de préhension (15L, 15R, 16L, 16R, 18) sont des pinces latérales (16L, 16R), une pince inférieure (15L, 15R), et un couvercle coulissant (18) sont fixés ensemble à un corps mobile (14) fixé sur un guide linéaire (10B) relié à l'arbre (12) de l'unité de rotation (10) pour ajouter à la rotation du plateau (3, 13) une translation transversalement à l'axe (12A) de l'arbre de rotation (12), et dans une direction avec une composante tangentielle à la rotation.

7. L'unité selon l'une quelconque des revendications 5 ou 6, **caractérisée en ce que** l'unité de rotation (10) est adaptée pour effectuer un mouvement du plateau comprenant des sections elliptiques.

8. Un appareil (1) pour vider un plateau (3, 13) pour des articles en forme de tige (R) de l'industrie du tabac, muni
d'une station de plateaux remplis (2),
d'un module de manipulation (19) comprenant une unité de rotation (10) avec un arbre de rotation (12) adapté pour faire tourner le plateau rempli (3, 13) autour d'un axe (12A), et une unité de levage (11) conçue pour lever et abaisser l'unité de rotation (10),
une station de vidage de plateaux remplis (23),
une station de plateaux vides (25),
**caractérisé en ce que**
l'unité de rotation (10) est adaptée pour faire tourner le plateau (3, 13) et pour déplacer le plateau (3, 13) transversalement à l'axe (12A) de l'arbre de rotation (12) pendant le mouvement de l'unité de levage (11), et l'unité de rotation (10) est en outre adaptée pour ajouter à la rotation du plateau (3, 13) une translation transversalement à l'axe (12A) de l'arbre de rotation (12), et dans une direction avec une composante tangentielle à la rotation.

9. L'appareil selon la revendication 8, **caractérisé en ce que** l'unité de rotation (10) est munie d'un mécanisme de maintien (10A) et d'éléments de préhension (15L, 15R, 16L, 16R, 18), adaptés pour se déplacer ensemble avec le plateau maintenu (3, 13), transversalement à l'axe (12A) de l'arbre rotatif (12) et dans une direction avec une composante tangentielle à la rotation.

10. L'appareil selon la revendication 9, **caractérisé en ce que** les éléments de préhension (15L, 15R, 16L, 16R, 18) conçu comme une paire de pinces latérales (16L, 16R), une pince inférieure (15L, 15R), et un couvercle coulissant (18) sont fixés ensemble à un corps mobile (14) fixé à un guide linéaire (10B) relié à l'arbre (12) de l'unité de rotation (10) pour ajouter à la rotation du plateau (3, 13) une translation transversalement à l'axe (12A) de l'arbre de rotation (12), et dans une direction avec une composante tangentielle à la rotation.

11. L'appareil selon l'une quelconque des revendications 8 à 10, **caractérisé en ce que** l'unité de rotation (10) est adaptée pour exécuter un mouvement complexe constitué de sections elliptiques.

12. L'appareil selon l'une quelconque des revendications 8 à 11, **caractérisé en ce que** l'appareil est muni d'une unité d'ouverture (21, 35) conçue pour ouvrir la paroi articulée du plateau à cinq parois (13).

13. Un procédé pour vider un plateau (3, 13) pour des articles en forme de tige (R) de l'industrie du tabac, dans lequel
le plateau rempli (3, 13) est placé sur la station de plateaux remplis (2),
le plateau rempli (3, 13) est transporté le long de la station de plateaux remplis (2),
le plateau rempli (3,13) est soulevé au moyen de l'unité de levage (11),
le plateau rempli (3, 13) est déplacé au moyen de l'unité de rotation (10) avec un arbre de rotation (12) avec axe (12A),
le plateau rempli (3, 13) est placé dans la station de vidage de plateaux remplis (23),
le plateau vide (3, 13) est transporté vers la station de plateaux vides (25),
le plateau vide (3, 13) est reçu depuis la station de plateaux vides (25),
**caractérisé en ce que**
pendant le levage du plateau (3, 13), le plateau rempli (3, 13) est mis en rotation et déplacé transversalement à l'axe (12A) de l'arbre de rotation (12) dans une direction avec une composante tangentielle à la rotation, par l'unité de rotation (10).
